# EUROPÄISCHE PATENTSCHRIFT

(11) **EP 2 739 873 B1**
(45) Veröffentlichungstag und Bekanntmachung des Hinweises auf die Patenterteilung: **21.10.2015**
(21) Anmeldenummer: 12745618.4
(22) Anmeldetag: 13.07.2012
(51) Int. Cl.: F16D 25/10, F16D 25/08

(54) **AUSRÜCKSYSTEM**
DISENGAGING SYSTEM
SYSTÈME DE DÉBRAYAGE

(30) Priorität: 05.08.2011 DE 102011080544; 07.05.2012 DE 102012207543; 14.06.2012 DE 102012209943
(43) Veröffentlichungstag der Anmeldung: 11.06.2014
(73) Patentinhaber: Schaeffler Technologies AG & Co. KG, 91074 Herzogenaurach (DE)
(72) Erfinder: SESTER, Christof, 77723 Gengenbach (DE); KRAHTOV, Luben, 76530 Baden-Baden (DE); LÖRCH, Herbert, 76547 Sinzheim (DE)
(74) Vertreter: Maas, Florian
(86) Internationale Anmeldenummer: PCT/DE2012/000707
(87) Internationale Veröffentlichungsnummer: WO 2013/020535

(56) Entgegenhaltungen:
- DE-A1- 3 043 861
- DE-A1- 4 338 262
- DE-A1- 10 021 175
- DE-A1- 10 349 171
- DE-A1-102009 034 812
- DE-A1-102010 022 750

## Beschreibung

Die Erfindung betrifft ein Ausrücksystem zur Betätigung einer Kupplung, wobei das Ausrücksystem insbesondere in der Art eines CSC (Concentric Slave Cylinder) ausgebildet ist, nach dem Oberbegriff des ersten Patentanspruchs.

Ein Kupplungsausrücksystem besteht im Wesentlichen aus einem Gehäuse, in dem ein mit einem Ausrücklager bzw. Einrücklager verbundener Kolben axial geführt wird. Da dieses Aus-/ Einrücklager mit der Beaufschlagungseinrichtung der Reibungskupplung in Wirkverbindung steht, werden Schleppmomente von der Antriebseinheit des Fahrzeuges kommend auf das Einrücklager übertragen. Durch diese Schleppmomente neigt der sich drehende, lediglich über einen Reibkontakt in der Aufnahme fixierte Lagerring des Einrücklagers, zum Verdrehen gegenüber der Aufnahme, wodurch Zentrierungsvorgänge des Einrücklagerrings gegenüber dem Kolben zu einem entsprechenden Verschleiß führen. Daher ist es bekannt, Verdrehsicherungen zwischen dem nicht drehenden Lagerring und dem Beaufschlagungsteil vorzusehen, die eine Verdrehung verhindern.

Es sind dabei reibschlüssig und formschlüssig wirkende Verdrehsicherungen bekannt. Bei Erhöhung der Schleppmomente, insbesondere bei tiefen Temperaturen, besteht bei reibschlüssigen Verdrehsicherungen die Gefahr des Rutschens, während bei formschlüssigen Verdrehsicherungen die Gefahr der Zerstörung der Verdrehsicherung und Beschädigung der Betätigungseinheit nicht auszuschließen ist. Zur Vermeidung der Übertragung des Schleppmomentes fungiert die Vorlastfeder als Abstützung des Einrücklagers des Nehmerzylinderkolbens am Nehmerzylindergehäuse.

Eine Doppelkupplung dagegen umfasst zwei im Wesentlichen separate Kupplungseinheiten, die unabhängig voneinander über jeweils eine Einrückvorrichtung eine Verbindung zu je einer Getriebeeingangswelle unterbrechen und herstellen können. Ein bevorzugtes Einsatzgebiet einer solchen Doppelkupplung ist die Kombination mit einem Doppelkupplungsgetriebe. Die erste Kupplungseinheit bedient hierbei beispielsweise die ungeraden Gangstufen und die zweite Kupplungseinheit die geraden Gangstufen. Auf diese Weise kann, während über die eine Kupplungseinheit aktuell Drehmoment vom Motor auf das Getriebe übertragen wird, bereits eine andere Gangstufe vorgewählt werden, um anschließend ohne Unterbrechung der Zugkraft von der aktuellen Gangstufe in die vorgewählte Gangstufe schalten zu können. Die Getriebeeingangswelle ist hierfür meist aus zwei konzentrischen Wellen aufgebaut, das heißt aus einer Hohlwelle und einer innen liegenden Vollwelle.

Eine solche Doppelkupplung ist beispielsweise aus der DE 10 2009 053 486 A1 bekannt. Zur Betätigung der einzelnen Kupplungseinheiten sind hier zwei konzentrisch zueinander angeordnete, mit Einrücklagern in Wirkverbindung stehende Nehmerzylinderkolben bzw. Stellkolben, das heißt ein innerer Nehmerzylinderkolben und ein äußerer Nehmerzylinderkolben, vorgesehen. Der innere und der äußere Nehmerzylinderkolben werden jeweils in einem gemeinsamen ringzylindrischen Nehmerzylindergehäuse geführt. Ein solcher Nehmerzylinder wird auch als CSC (Concentric Slave Cylinder) bezeichnet. Nach der Druckschrift DE 10 2009 053 486 A1 ist das die Schleppmomentenabstützung und die Verdrehsicherung gewährleistende Federelement in Form eines Federbleches ausgebildet, welches laschenförmige Erweiterungen aufweist. Diese Laschen hintergreifen die Erhebungen der Schleppmomentabstützung. Der Kolben ist so ausgebildet, dass die Schleppmomentabstützung über das Federblech durch Reibschluss mit dem Kolben erfolgt. Die Montage des Federbleches ist dabei sehr aufwendig.

Weiterhin offenbart die DE 10 2009 034 812 A1 ein Ausrücksystem zur Betätigung einer Kupplung gemäß den Merkmalen des Oberbegriffs des Patentanspruchs 1.

Es ist weiterhin bekannt, dass für hydraulische CSC die Verdrehsicherung und die Kupplungsvorlast über die Vorlastfeder erfolgt. Die Vorlastfeder liegt konzentrisch über dem hydraulischen Betätigungszylinder und bildet einen Form- bzw. Reibschluss zum Gehäuse und zum Ausrücklager. Die Vorlastfeder hat meist 4 oder mehr Windungen und eine Vorlast von 100 N. Die Vorlast der Vorlastfeder ist gegen die Kupplung gerichtet. Durch die Vorlast dreht das Lager geräuscharm beziehungsweise mit geringem Schlupf zur Kupplung. Dieses Design hat sich bisher als eine vorteilhafte Lösung erwiesen.

Für die Betätigung der Kupplung muss die Vorlastfeder das Lagerschleppmoment abzustützen, wobei zu gewährleisten ist, dass sich die Vorlastfeder nicht stark aufweitet. Die Kupplung leitet zusätzlich starke Taumelbewegungen ein (induziert durch Zungenschlag, Schiefstellung, Mittenversatz der Tellerfeder etc) und axial überlagerte Schwingbewegungen in den Kolben. In Kombination mit dem Lagerschleppmoment ist diese Bewegung an der Verdrehsicherung abzustützen. Daraus entsteht ein massiver Verschleiß an der Verdrehsicherung. Weiterhin verhindern bekannte Verdrehsicherungen die Drehung der Dichtung. Bei Vorhandensein minimaler Riefen in der Dichtfläche oder auch von Schmutzpartikeln begünstigt das die Entstehung von Riefen auf der Dichtung verbunden mit dem frühzeitigen Ausfall des Dichtsystems.

Für den Anwendungsfall einer Kupplung/Doppelkupplung, die in Schnüffelposition (Ausgangsstellung, System drucklos) eine Vorlast gegen den Einrücklageranschlag aufbringt, würde eine zusätzliche Kraft (Vorlast), die dem entgegenwirkt, die Kupplungskennlinie negativ beeinflussen und kann in der Kupplung kaum ausgeglichen werden. Dies könnte lediglich mit dem Absenken der Kupplungskraft erfolgen, welches negative Auswirkungen auf die Systemanforderungen wie z. B. Systemgeschwindigkeit hat.

Aufgabe der Erfindung ist es, ein Ausrücksystem zur Betätigung einer Kupplung zu entwickeln, wobei das Ausrücksystem insbesondere in der Art eines CSC (Concentric Slave Cylinder) ausgebildet ist und die oben genannten Nachteile löst und keine Vorlast aufbringt.

Diese Aufgabe wird mit den kennzeichnenden Merkmalen des ersten Patentanspruchs gelöst.

Vorteilhafte Ausgestaltungen ergeben sich aus den Unteransprüchen.

Das Ausrücksystem ist insbesondere in Form eines (CSC) ausgebildet, der vorzugsweise ein Ausrücksystem zur Betätigung einer Kupplung aufweist und zumindest einen in einem Gehäuse entlang einer Längsachse verschiebbaren ersten Kolben aufweist, der auf ein Einrücklager wirkt, wobei erfindungsgemäß bei in Schnüffelstellung drucklosem System zur Abstützung eines Schleppmomentes und zur Anpassung einer Kupplungskennlinie ein Lagerring des Einrücklagers mit einem energiespeichernden Element beaufschlagbar ist und das energiespeichernde Element in die gleiche Kraftrichtung wie die Kupplung wirkt.

Das Ausrücksystem kann zur Betätigung von Einfach- oder Doppelkupplungen dienen.

Wird das Ausrücksystem zur Betätigung einer Doppelkupplung verwendet, weist es einen ersten Kolben und einen zweiten Kolben auf, wobei der erste Kolben radial außen liegend zum zweiten Kolben angeordnet ist und beide Kolben als Ringkolben ausgebildet und konzentrisch in einem gemeinsamen Gehäuse untergebracht sind, wobei der erste Kolben auf ein radial außen liegendes erstes Einrücklager und der zweite Kolben auf ein radial innen liegendes zweites Einrücklager wirkt und wobei bei einer Kupplungsbetätigungsvorrichtung mit in Schnüffelstellung drucklosem System zur Abstützung eines Schleppmomentes und zur Anpassung einer Kupplungskennlinie ein erster Lagerring des ersten Einrücklagers mit einem ersten energiespeichernden Element und ein zweiter Lagerring des zweiten Einrücklagers mit einem zweiten energiespeichernden Element beaufschlagbar sind, wobei das erste und das zweite energiespeichernde Element in die gleiche Kraftrichtung wie die Kupplung wirken.

Das erste energiespeichernde Element ist in Form einer ersten Druckfeder und das zweite energiespeichernde Element in Form einer zweiten Druckfeder ausgebildet derart, dass die erste/zweite Druckfeder eine Verdrehsicherung für den ersten/zweiten Lagerring bilden und in vorteilhafter Weise das Schleppmoment des ersten/zweiten Einrücklagers übertragen und die Kupplung entlasten. Die Druckfedern wirken somit nicht als Vorlastfedern.

Vorzugsweise werden die erste Druckfeder und/oder die zweite Druckfeder jeweils direkt oder über ein Halteelement verdrehgesichert mit dem Gehäuse verbunden, wobei das jeweilige Halteelement auch zur Fixierung und Verdrehsicherung der ersten/zweiten Druckfeder dient und vorteilhafter Weise auch einen Endanschlag in minimaler Extension (minimaler Ausrückstellung) bilden, der als Transportsicherung dient.

Die erste Druckfeder ist an ihrem ersten Ende radial verdrehgesichert direkt oder über ein erstes Halteblech mit dem ersten Lagerring des ersten Einrücklagers und mit ihrem zweiten Ende verdrehgesichert direkt oder über das Halteelement in Form eines ersten Halterings mit dem Gehäuse verbunden. Analog ist die zweite Druckfeder an ihrem ersten Ende radial verdrehgesichert direkt oder über ein zweites Halteblech mit dem zweiten Lagerring des zweiten Einrücklagers und mit ihrem zweiten Ende verdrehgesichert direkt oder über das Halteelement in Form eines zweiten Halterings mit dem Gehäuse wirkverbunden.

Dabei bilden der erste/zweite Haltering eine Verdrehsicherung für die erste/zweite Druckfeder beispielsweise dadurch, dass die erste/zweite Druckfeder in ein ausgestanztes Fenster, einen Hinterschnitt oder eine anderweitige Ausnehmung des ersten/zweiten Halterings eingreift.

Vorteilhaft ist auch, dass der erste/zweite Kolben zu dem ersten/zweiten Halteblech ein Spiel aufweist und relativ dazu drehbar ist, wodurch sich der Verschleiß erheblich reduziert.

Die erste und/oder zweite Druckfeder weisen eine Windungsanzahl von 1,5 bis maximal 3 Windungen auf, wodurch nur ein geringer Bauraum benötigt wird.

Bei einem eventuellen Übermoment vom Einrücklager verdreht sich das energiespeichernde Element entsprechend seines Torsionsmomentes bis zu einem definierten Maß und bildet somit eine Verdrehsicherung für den stehenden Lagerring des Einrücklagers. Das Energiespeichernde Element erzeugt somit eine Federkraft entgegen der Einrückrichtung des CSC.

Die erfindungsgemäße Lösung ist für Anwendungen vorgesehen, in denen keine Vorlast für das Einrücklager notwendig ist und wobei daher das energiespeichernde Element hauptsächlich als Lagerschleppmomentenabstützung und zusätzlich als Entlastungsfeder dient.

In jedem Fall überträgt das energiespeichernde Element das Lagerschleppmoment und entlastet in diesem Anwendungsfall die Kupplung dadurch, dass die Wirkrichtung anders ist, als im klassischen CSC, nämlich tangential, so dass die Feder das Einrücklager in Richtung seiner minimalen Ausrückstellung drückt.

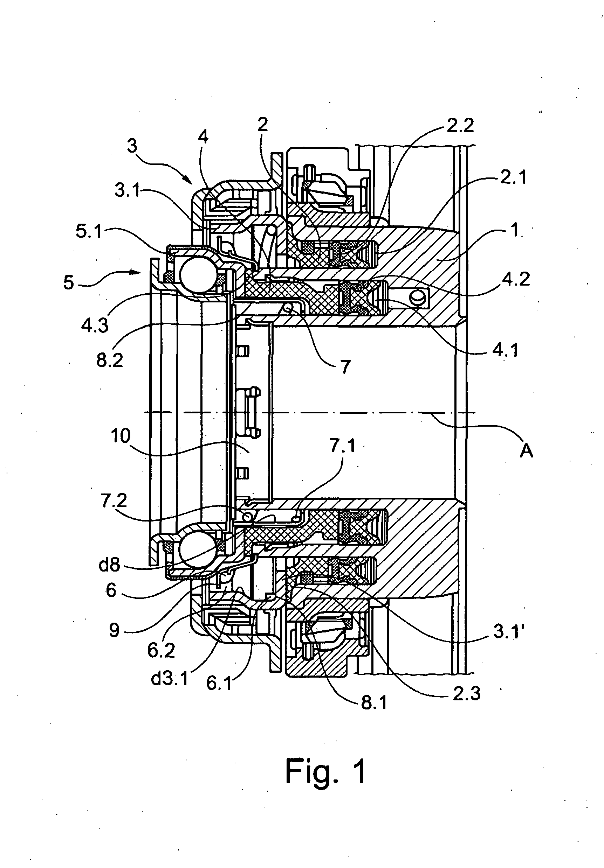

Die Erfindung wird nachfolgend anhand eines Ausführungsbeispiels und zugehöriger Figur 1 näher erläutert.

Das Ausrücksystem ist gemäß Figur 1 als CSC (Concentric Slave Cylinder) ausgebildet und dient zur Betätigung einer Doppelkupplung. Es weist ein Gehäuse 1 auf, in welchem ein erster Kolben 2 in einem Druckraum 2.1 in Richtung zur Längsachse A verschiebbar angeordnet ist. An dem ersten Kolben 2 ist in Richtung zum ersten Druckraum 2.1 eine erste Dichtung 2.2 vorhanden und an dem der ersten Dichtung 2.2 gegenüberliegenden Ende wirkt der erste Kolben 2 auf einen stehenden ersten Lagerring 3.1 eines ersten radial außen angeordneten Einrücklagers 3.

Konzentrisch innerhalb des ersten Kolbens 2 ist ein zweiter Kolben 4 in einem zweiten Druckraum 4.1 axial verschiebbar gelagert und über eine zweite Dichtung 4.2 zum zweiten Druckraum 4.1 abgedichtet. An dem der zweiten Dichtung 4.2 gegenüberliegenden Ende wirkt der zweite Kolben 4 auf einen stehenden zweiten Lagerring 5.1 eines radial innen angeordneten zweiten Ausrücklagers 5. Die Verdrehsicherung des stehenden ersten Lagerrings 3.1 zu dem Gehäuse 1 erfolgt über eine erste Druckfeder 6 in Form einer Spiralfeder und die Verdrehsicherung des zweiten Lagerrings 5.1 zu dem Gehäuse 1 über eine zweite Druckfeder 7 in Form einer Zylinderfeder.

Die erste Druckfeder 6 ist an ihrem ersten Ende 6.1 nicht direkt, sondern über ein erstes Halteblech 8.1 mit dem ersten Lagerring 3.1 verdrehfest verbunden. Analog ist auch die zweite Druckfeder 7 an ihrem ersten Ende 7.1 nicht direkt, sondern überein zweites Halteblech 8.2 radial verdrehgesichert mit dem zweiten Lagerring 5.1 verbunden.

Das zweite Ende 6.2 der ersten Druckfeder 6 ist ebenfalls verdrehgesichert über einen ersten Haltering 9 und das zweite Ende 7.2 der zweiten Druckfeder 7 verdrehgesichert über einen zweiten Haltering 10 mit dem Gehäuse 1 verbunden.

Die erste Druckfeder 6 und die zweite Druckfeder 7 übertragen das Lagerschleppmoment des ersten und zweiten Einrücklagers 4 und 5 und entlasten in diesem Anwendungsfall die nicht dargestellte Kupplung (Doppelkupplung) dadurch, dass diese das jeweilige Einrücklager 3, 5 in Richtung seiner minimalen Ausrückstellung drücken. Die Wirkrichtung ist somit anders als in einem klassischen CSC.

Der erste Kolben 2 weist ein Spiel zum stehenden ersten Lagerring 3.1 und der zweite Kolben 4 ein Spiel zum Halteblech 8 auf, wodurch sich der erste und der zweite Kolben 2, 4 unabhängig dazu drehen können und sich der Dichtungsverschleiß der ersten und der zweiten Dichtung 2.2, 4.2 reduziert.

Die Lösung wird bevorzugt eingesetzt, wenn die nicht dargestellte Doppelkupplung in Schnüffelposition, bei welcher das System drucklos ist, eine Vorlast gegen den Einrücklageranschlag aufbringt. Dadurch ist keine Vorlast für die Einrücklager 3, 5 des CSC notwendig und die energiespeichernden auf die Einrücklager 3, 5 wirkenden Elemente (hier die erste Druckfeder 6 und die zweite Druckfeder 7) müssen keine Vorlast für das erste und zweite Einrücklager 3, 5 aufbringen und dienen daher lediglich zur Schleppmomentenabstützung des ersten und zweiten Einrücklagers 3, 5. Dadurch ist es erstmalig möglich, jeweils ein relativ weiches Federelement mit 1,5 bis 3 Windungen einzusetzen.

Zur Schleppmomentabstützung und Anpassung der Kupplungskennlinie wird erstmalig eine Druckfeder eingesetzt, die über Umleitbleche in Form des ersten und zweiten Halteblechs das jeweilige Einrücklager gegen den entsprechenden Kolben drückt.

Zur Verringerung von Spiel und Geräuschentwicklung in der minimalen Extension bzw. minimalen Ausrückstellung wird gemäß der Zeichnung weiterhin vorgesehen, am ersten und am zweiten Kolben 2, 4 einen Anschlag auszubilden, der zwischen dem ersten bzw. zweiten Einrücklager 3, 5 bzw. dem ersten und zweiten Lagerring 3.1, 5.1 und dem Gehäuse 1 zur Anlage kommt und somit als Zwischenelement zur Verringerung von Spiel und Geräusch dient.

Dazu weist der erste Kolben 2 an seinem in Richtung zum ersten Lagerring 3.1 weisenden Ende eine erste Durchmessererweiterung 2.3 und der zweite Kolben 4 an seinem in Richtung zum zweiten Lagerring 5.2 Neisenden Ende eine zweite Durchmessererweiterung 4.3 auf derart, dass die formschlüssige Endposition des jeweiligen ersten/zweiten Kolbens 2, 4 auf das Gehäuse 1 anschlägt. Somit liegt das erste/zweite Einrücklager 3, 5 mit dem drehfesten ersten/zweiten Lagerring 3.1/5.1 in Endposition an dem ersten/zweiten Kolben 2, 4 an, der wiederum mit der ersten/zweiten Durchmessererweiterung 2.3, 4.3 an dem Gehäuse 1 anliegt. Durch die permanente Vorlast im System ist somit der erste/zweite Kolben 2, 4 zwischen dem ersten/zweiten Einrücklager 3, 5 und Gehäuse 1 spielfrei geklemmt. Als Kontaktstellenmaterial kann z. B. Stahl (erstes/zweites Einrücklager 3, 5) zu Kunststoff (erster/zweiter Kolben 2, 4) und Kunststoff (erster/zweiter Kolben 2, 4) zu Aluminium (Gehäuse 1) gewählt werden.

Der erste und der zweite Lagerring 3.1, 5.1 des ersten und zweiten Einrücklager 3, 5 haben somit keinen Kontakt zum Gehäuse 1 und liegen ausschließlich am ersten/zweiten Kolben 2, 4 an, wodurch Geräusche vermieden und das Spiel im System reduziert werden.

### Bezugszeichenliste

- 1: Gehäuse
- 2: erster Kolben
- 2.1: erster Druckraum
- 2.2: erste Dichtung
- 2.3: erste Durchmessererweiterung
- 3: Einrücklager
- 3.1: erster Lagerring
- 3.1': nach innen weisender Bereich
- 4: zweiter Kolben
- 4.1: zweiter Druckraum
- 4.2: zweite Dichtung
- 4.3: zweite Durchmessererweiterung
- 5: zweites Einrücklager
- 5.1: zweiter Lagerring
- 6: erste Druckfeder
- 6.1: erstes Ende der ersten Druckfeder 6
- 6.2: zweites Ende der ersten Druckfeder 6
- 7: zweite Druckfeder
- 7.1: erstes Ende der zweiten Druckfeder 7
- 7.2: zweites Ende der zweiten Druckfeder 7
- 8.1: erstes Halteblech
- 8.2: zweites Halteblech
- 9: erster Haltering
- 10: zweiter Haltering
- A: Längsachse

## Patentansprüche

1. Ausrücksystem zur Betätigung einer Kupplung, wobei das Ausrücksystem insbesondere in der Art eines CSC (Concentric Slave Cylinder) ausgebildet ist und zumindest einen in einem in einem Gehäuse (1) entlang einer Längsachse (A) verschiebbaren ersten Kolben (2) aufweist, der auf ein Einrücklager wirkt, **dadurch gekennzeichnet, dass** bei in Schnüffelstellung drucklosem System zur Abstützung eines Schleppmomentes und zur Anpassung einer Kupplungskennlinie ein Lagerring des Einrücklagers mit einem energiespeichernden Element beaufschlagbar ist, wobei das energiespeichernde Element in die gleiche Kraftrichtung wie die Kupplung wirkt und das jeweilige Einrücklager gegen den Kolben in Richtung der Mindeststellung drückt.

2. Ausrücksystem nach Anspruch 1, **dadurch gekennzeichnet, dass** es zur Betätigung einer Kupplung in Form einer Doppelkupplung einen in einem Gehäuse (1) entlang der Längsachse (A) verschiebbaren ersten Kolben (2) und einem zum ersten Kolben (2) konzentrisch angeordneten und radial innen liegenden und entlang der Längsachse (A) verschiebbaren zweiten Kolben (4) aufweist, wobei der erste Kolben (2) auf ein radial außen liegendes erstes Einrücklager (3) und der zweite Kolben (4) auf ein radial innen liegendes zweites Einrücklager (5) wirkt und bei dem in Schnüffelstellung drucklosem System zur Abstützung eines Schleppmomentes und zur Anpassung einer Kupplungskennlinie ein erster Lagerring (3.1) des ersten Einrücklagers (3) mit einem ersten energiespeichernden Element und ein zweiter Lagerring (5.1) des zweiten Einrücklagers (5) mit einem zweiten energiespeichernden Element beaufschlagbar sind, wobei das erste und das zweite energiespeichernde Element in die gleiche Kraftrichtung wie die Kupplung wirken.

3. Ausrücksystem nach Anspruch 2, **dadurch gekennzeichnet, dass** das erste energiespeichernde Element als eine erste Druckfeder (6) und das zweite energiespeichernde Element als eine zweite Druckfeder (7) ausgebildet ist und dass die erste/zweite Druckfeder (6, 7) eine Verdrehsicherung für den ersten/zweiten Lagerring (3.1, 5.1) bilden.

4. Ausrücksystem nach Anspruch 3, **dadurch gekennzeichnet, dass** die erste und zweite Druckfeder (6, 7) das Schleppmoment des ersten/zweiten Einrücklagers (3, 5) übertragen und die Kupplung entlasten.

5. Ausrücksystem nach Anspruch 3 oder 4, **dadurch gekennzeichnet, dass** die erste Druckfeder (6) und/oder die zweite Druckfeder (7) jeweils direkt oder über ein Halteelement verdrehgesichert mit dem Gehäuse (1) verbunden sind und dass das jeweilige Halteelement zur Fixierung und Verdrehsicherung der ersten/zweiten Druckfeder (6, 7) dient.

6. Ausrücksystem nach Anspruch 5, **dadurch gekennzeichnet, dass** das/die Halteelemente einen Endanschlag in minimaler Ausrückstellung bilden, der als Transportsicherung dient.

7. Ausrücksystem nach Anspruch 5 oder 6, **dadurch gekennzeichnet, dass** die erste Druckfeder (6) an ihrem ersten Ende (6.1) radial verdrehgesichert direkt oder über ein erstes Halteblech (8.1) mit dem ersten Lagerring (3.1) des ersten Einrücklagers (3) und mit ihrem zweiten Ende (6.2) verdrehgesichert direkt oder über das Halteelement in Form eines ersten Halterings (9) mit dem Gehäuse (1) verbunden ist.

8. Ausrücksystem nach Anspruch 7, **dadurch gekennzeichnet, dass** die zweite Druckfeder (7) an ihrem ersten Ende (7.1) radial verdrehgesichert direkt oder über ein zweites Halteblech (8.2) mit dem zweiten Lagerring (5.1) des zweiten Einrücklagers (5) und mit ihrem zweiten Ende (7.2) verdrehgesichert direkt oder über das Halteelement in Form eines zweiten Halterings (10) mit dem Gehäuse (1) verbunden ist.

9. Ausrücksystem nach Anspruch 5 oder 6, **dadurch gekennzeichnet, dass** die zweite Druckfeder (7) an ihrem ersten Ende (7.1) radial verdrehgesichert direkt oder über ein zweites Halteblech (8.2) mit dem zweiten Lagerring (5.1) des zweiten Einrücklagers (5) und mit ihrem zweiten Ende (7.2) verdrehgesichert direkt oder über das Halteelement in Form eines zweiten Halterings (10) mit dem Gehäuse (1) verbunden ist.

10. Ausrücksystem nach Anspruch 8 oder 9, **dadurch gekennzeichnet, dass** der erste/zweite Haltering (9, 10) eine Verdrehsicherung für die erste/zweite Druckfeder (6, 7) bildet dadurch, dass die erste/zweite Druckfeder (6, 7) in ein ausgestanztes Fenster, einen Hinterschnitt oder eine anderweitige Ausnehmung des ersten/zweiten Halterings (9, 10) eingreift.

11. Ausrücksystem nach Anspruch 8 öder 9, **dadurch gekennzeichnet, dass** der erste/zweite Kolben (2, 4) zu dem ersten/zweiten Halteblech (8) ein Spiel aufweist und relativ dazu drehbar ist.

12. Ausrücksystem nach einem der Ansprüche 3 bis 11, **dadurch gekennzeichnet, dass** die erste und/oder zweite Druckfeder (6, 7) eine Windungsanzahl von 1,5 bis maximal 3 Windungen aufweisen.

## Claims

1. Disengaging system for actuating a clutch, wherein the disengaging system is embodied, in particular, in the manner of a CSC (concentric slave cylinder) and has at least a first piston (2) which can be displaced in a housing (1) along a longitudinal axis (A) and acts on an engagement bearing, **characterized in that**, in the case of a system which is pressureless in the sniffing position an energy-storing element can be applied to a bearing ring of the engagement bearing in order to support a drag torque and to adapt a clutch characteristic curve, wherein the energy-storing element acts in the same direction of force as the clutch, and presses the respective engagement bearing against the piston in the direction of the minimum position.

2. Disengaging system according to Claim 1, **characterized in that** said system has, for the actuation of a clutch in the form of a double clutch, a first piston (2) which can be displaced in a housing (1) along the longitudinal axis (A), and a second piston (4) which is arranged concentrically with respect to the first piston (2), lies radially on the inside and can be displaced along the longitudinal axis (A), wherein the first piston (2) acts on a first engagement bearing (3) lying radially on the outside, and the second piston (4) acts on a second engagement bearing (5) lying radially on the inside, and, in the case of the system which is pressureless in the sniffing position, a first energy-storing element can be applied to a first bearing ring (3.1) of the first engagement bearing (3) and a second energy-storing element can be applied to a second bearing ring (5.1) of the second engagement bearing (5) in order to support a drag torque and to adapt a clutch characteristic curve, wherein the first and the second energy-storing elements act in the same direction of force as the clutch.

3. Disengaging system according to Claim 2, **characterized in that** the first energy-storing element is embodied as a first compression spring (6), and the second energy-storing element is embodied as a second compression spring (7), and **in that** the first/second compression springs (6, 7) form a rotational fixing means for the first/second bearing ring (3.1, 5.1).

4. Disengaging system according to Claim 3, **characterized in that** the first and second compression springs (6, 7) transmit the drag torque of the first/second engagement bearing (3, 5) and relieve the clutch.

5. Disengaging system according to Claim 3 or 4, **characterized in that** the first compression spring (6) and/or the second compression spring (7) are each connected in a rotationally fixed fashion to the housing (1), directly or via a securing element, and **in that** the respective securing element serves to secure and rotationally fix the first/second compression spring (6, 7).

6. Disengaging system according to Claim 5, **characterized in that** the securing element or elements form an end stop in a minimum disengaging position, which end stop serves as a transport securing means.

7. Disengaging system according to Claim 5 or 6, **characterized in that** the first compression spring (6) is connected at its first end (6.1) in a radially rotationally fixed fashion to the first bearing ring (3.1) of the first engagement bearing (3) directly or via a first securing plate (8.1), and by its second end (6.2) in a rotationally fixed fashion to the housing (1) directly or via the securing element in the form of a first securing ring (9).

8. Disengaging system according to Claim 7, **characterized in that** the second compression spring (7) is connected at its first end (7.1) in a radially rotationally fixed fashion to the second bearing ring (5.1) of the second engagement bearing (5) directly or via a second securing plate (8.2), and by its second end (7.2) in a rotationally fixed fashion to the housing (1) directly or via the securing element in the form of a second securing ring (10).

9. Disengaging system according to Claim 5 or 6, **characterized in that** the second compression spring (7) is connected at its first end (7.1) in a radially rotationally fixed fashion to the second bearing ring (5.1) of the second engagement bearing (5) directly or via a second securing plate (8.2), and by its second end (7.2) in a rotationally fixed fashion to the housing (1) directly or via the securing element in the form of a second securing ring (10).

10. Disengaging system according to Claim 8 or 9, **characterized in that** the first/second securing ring (9, 10) forms a rotational fixing means for the first/second compression spring (6, 7), **in that** the first/second compression spring (6, 7) engages in a punched-out window, an undercut or some other type of recess in the first/second securing ring (9, 10).

11. Disengaging system according to Claim 8 or 9, **characterized in that** the first/second piston (2, 4) has play with respect to the first/second securing plate (8) and can rotate relative thereto.

12. Disengaging system according to one of Claims 3 to 11, **characterized in that** the first and/or second compression springs (6, 7) have a number of turns of 1.5 to maximum 3 turns.

## Revendications

1. Système de débrayage pour actionner un embrayage, le système de débrayage étant notamment réalisé sous la forme d'un CSC (Concentric Slave Cylinder) et comportant au moins un premier piston (2) pouvant être déplacé dans un carter (1) le long d'un axe longitudinal (A) agissant sur un palier d'embrayage, **caractérisé en ce qu'**en cas de système sans pression en position de reniflage, une bague de palier du palier d'embrayage peut être sollicitée avec un élément d'accumulation d'énergie pour soutenir un couple de traînée et pour adapter une courbe caractéristique d'embrayage, l'élément d'accumulation d'énergie agissant dans la même direction de force que l'embrayage et le « palier d'embrayage » respectif appuyant contre le piston en direction de la position minimale.

2. Système de débrayage selon la revendication 1, **caractérisé en ce qu'**il comporte, pour actionner un embrayage sous la forme d'un double embrayage, un premier piston (2) pouvant être déplacé dans un carter (1) le long de l'axe longitudinal (A) et un deuxième piston (4) disposé concentriquement par rapport au premier piston (2) et reposant à l'intérieur dans le plan radial et pouvant être déplacé le long de l'axe longitudinal (A), le premier piston (2) agissant sur un premier palier d'embrayage (3) reposant à l'extérieur dans le plan radial et le deuxième piston (4) agissant sur un deuxième palier d'embrayage (5) reposant à l'intérieur dans le plan radial et dans le cas du système sans pression en position de reniflage servant à soutenir un couple de traînée et à adapter une courbe caractéristique d'embrayage, une première bague de palier (3.1) du premier palier d'embrayage (3) pouvant être sollicitée avec un premier élément d'accumulation d'énergie et une deuxième bague de palier (5.1) du deuxième palier d'embrayage (5) pouvant être sollicitée avec un deuxième élément d'accumulation d'énergie, le premier et le deuxième élément d'accumulation d'énergie agissant dans la même direction de force que l'embrayage.

3. Système de débrayage selon la revendication 2, **caractérisé en ce que** le premier élément d'accumulation d'énergie prend la forme d'un premier ressort de pression (6) et que le deuxième élément d'accumulation d'énergie prend la forme d'un deuxième ressort de pression (7) et que les premier/deuxième ressorts de pression (6, 7) forment une fixation anti-torsion pour la première/deuxième bague de palier (3.1, 5.1).

4. Système de débrayage selon la revendication 3, **caractérisé en ce que** les premier et deuxième ressorts de pression (6, 7) transmettent le couple de traînée du premier/deuxième palier d'embrayage (3, 5) et déchargent l'embrayage.

5. Système de débrayage selon la revendication 3 ou 4, **caractérisé en ce que** le premier ressort de pression (6) et/ou le deuxième ressort de pression (7) sont respectivement reliés de façon sécurisée contre la torsion au carter (1), directement ou via un élément d'arrêt et que l'élément d'arrêt respectif sert à la fixation et à la fixation anti-torsion des premier/deuxième ressorts de pression (6, 7).

6. Système de débrayage selon la revendication 5, **caractérisé en ce que** le ou les éléments d'arrêt forment une butée terminale dans la position de débrayage minimal, ladite butée servant de sécurité de transport.

7. Système de débrayage selon la revendication 5 ou 6, **caractérisé en ce que** le premier ressort de pression (6) est relié à la première bague de palier (3.1) du premier palier d'embrayage (3), au niveau de sa première extrémité (6.1), dans le plan radial de façon sécurisée contre la torsion, directement ou via une première tôle d'arrêt (8.1) et au carter (1) au niveau de sa deuxième extrémité (6.2), de façon sécurisée contre la torsion directement ou via l'élément d'arrêt prenant la forme d'une première bague d'arrêt (9).

8. Système de débrayage selon la revendication 7, **caractérisé en ce que** le deuxième ressort de pression (7) est relié à la deuxième bague de palier (5.1) du deuxième palier d'embrayage (5) au niveau de sa première extrémité (7.1) dans le plan radial de façon sécurisée contre la torsion ou via une deuxième tôle d'arrêt (8.2) et au carter (1) au niveau de sa deuxième extrémité (7.2) de façon sécurisée contre la torsion, directement ou via l'élément d'arrêt, sous la forme d'une deuxième bague d'arrêt (10).

9. Système de débrayage selon la revendication 5 ou 6, **caractérisé en ce que** le deuxième ressort de pression (7) est relié à la deuxième bague de palier (5.1) du deuxième palier d'embrayage (5) au niveau de sa première extrémité (7.1) dans le plan radial de façon sécurisée contre la torsion, directement ou via une deuxième tôle d'arrêt (8.2), et au carter (1) au niveau de sa deuxième extrémité (7.2) de façon sécurisée contre la torsion, directement ou via l'élément d'arrêt prenant la forme d'une deuxième bague d'arrêt (10).

10. Système de débrayage selon la revendication 8 ou 9, **caractérisé en ce que** la première/deuxième bague d'arrêt (9, 10) forme une fixation anti-torsion pour les premier/deuxième ressorts de pression (6, 7), **caractérisé en ce que**, les premier/deuxième ressorts de pression (6, 7) engrènent dans une fenêtre détourée un détouré arrière ou un évidement de taille autre de la première/deuxième bague d'arrêt (9, 10).

11. Système de débrayage selon la revendication 8 ou 9, **caractérisé en ce que** le premier/deuxième piston (2, 4) comporte un jeu par rapport à la première/deuxième tôle d'arrêt (8) et peut être tourné par rapport à elle.

12. Système de débrayage selon l'une quelconque des revendications 3 à 11, **caractérisé en ce que** le premier et/ou deuxième ressort de pression (6, 7) comporte un nombre d'enroulements de 1,5 à maximum 3 enroulements.
